# EUROPÄISCHE PATENTSCHRIFT

(11) **EP 3 302 864 B1**
(45) Veröffentlichungstag und Bekanntmachung des Hinweises auf die Patenterteilung: **18.11.2020**
(21) Anmeldenummer: 16723073.9
(22) Anmeldetag: 11.05.2016
(51) Int. Cl.: B23K 26/00, B28D 1/22, C03B 33/02, C03B 33/08, B23K 26/0622, B23K 26/146, B23K 103/00

(54) **VERFAHREN UND VORRICHTUNG ZUR HERSTELLUNG EINES STRUKTURIERTEN ELEMENTS DURCH MATERIALABTRAGENDE BEARBEITUNG MIT GEPULSTER LASERSSTRAHLUNG**
METHOD AND DEVICE FOR PRODUCING A STRUCTURED ELEMENT BY MEANS OF MATERIAL-REMOVING MACHINING BY PULSED LASER RADIATION
PROCÉDÉ ET DISPOSITIF DE FABRICATION D'UN ÉLÉMENT STRUCTURÉ PAR USINAGE PAR ENLÈVEMENT DE COPEAUX AU MOYEN D'UN FAISCEAU LASER PULSÉ

(30) Priorität: 03.06.2015 DE 102015210286
(43) Veröffentlichungstag der Anmeldung: 11.04.2018
(73) Patentinhaber: 3D-Micromac AG, 09126 Chemnitz (DE)
(72) Erfinder: WERNER, Michael, 09126 Chemnitz (DE); ZIMNY, Robin, 08058 Zwickau (DE)
(74) Vertreter: Patentanwälte Ruff, Wilhelm, Beier, Dauster & Partner mbB
(86) Internationale Anmeldenummer: PCT/EP2016/060552
(87) Internationale Veröffentlichungsnummer: WO 2016/192938

(56) Entgegenhaltungen:
- DE-A1-102011 051 198
- DE-B3-102005 055 174
- JP-A- 2000 015 467
- US-A1- 2010 133 245

## Beschreibung

Die Erfindung bezieht sich auf ein Verfahren zur Herstellung eines strukturierten Elements durch materialabtragende Bearbeitung eines Werkstücks mit gepulster Laserstrahlung und auf eine zur Durchführung des Verfahrens geeignete Vorrichtung (siehe z.B. DE 10 2011 051 198 A1).

Zur Herstellung von strukturierten Elementen mit einer dreidimensionalen Oberflächenstruktur ist es bekannt, die zu strukturierende Oberfläche des zur Herstellung des Elements verwendeten Werkstücks mit fokussierter Laserstrahlung zu bearbeiten. Besteht das Werkstück aus einem Werkstückmaterial, welches für die verwendete Laserstrahlung transparent ist, so ist eine laserinduzierte Ablation möglich, wenn im Bereich der Multi-Photonen-Absorption (nichtlineare Absorption) gearbeitet wird.

Bekannt ist beispielsweise die Bearbeitung eines Werkstücks mit dem Ultrakurzpulslaser von der Vorderseite. Der Laserstrahl wird auf die eintrittsseitige Oberfläche des Werkstücks fokussiert. Zwar ist das Werkstück transparent für die verwendete Laserwellenlänge (z.B. im sichtbaren oder NIR-Bereich), durch die Fokussierung entsteht jedoch eine so hohe Intensität, dass durch Multi-Photonen-Absorption eine Ablation an der Werkstückoberfläche stattfindet. Es können nur bestimmte Strukturen erzeugt werden. Beispielsweise sind die Wandwinkel des Abtrags durch die Parameter des Optik-Aufbaus beschränkt. Selbst mit Nachführung des Fokus lassen sich nicht beliebig steile Winkel erzeugen. Außerdem können z.B. keine Strukturen mit Hinterschneidungen erzeugt werden.

Der Artikel "Subsurface precision machining of glass substrates by innovative lasers" von K. Du und P. Shi in: Glass Sci. Technol. 76 (2003) No. 2 beschreibt u.a. eine Technologie, die es erlaubt, präzise hohle Strukturen in Glas zu erzeugen, die mit konventionellen mechanischen Methoden unmöglich wären. Es lassen sich, anders als beim Vorderseitenprozess, z.B. auch Strukturen mit Hinterschneidungen und hohem Aspektverhältnis erzeugen. Bei dem Verfahren wird der Laserstrahl eines Nanosekunden-Lasers von der Oberseite in das Glas eingestrahlt und wird auf die gegenüberliegende Unterseite fokussiert. Es ist dem verdampften Glasmaterial möglich, frei aus der Bearbeitungszone wegzuströmen. Durch geeignetes Auslenken des Strahls ist es möglich, präzise und reproduzierbar Löcher mit einem beliebigen Querschnitt im Glas zu produzieren.

Das laserinduzierte Rückseitenätzen (laser-induced backside wet etching, LIBWE) ist eine Methode, um direkt und mit hoher Qualität Mikrostrukturen in transparente dielektrische Materialien einzubringen. Der Ätzprozess findet dabei an der Rückseite der transparenten Probe statt, welche sich in Kontakt mit einer absorbierenden Flüssigkeit befindet.

Die DE 19912879 A1 beschreibt ein Verfahren zum Ätzen eines durchsichtigen Stoffes mit einem gepulsten Laserstrahl, bei dem die der laserbestrahlten Oberfläche gegenüberliegende Seite des Materials, die in Kontakt mit einem die Laserstrahlung absorbierendem Fluid ist, durch Absorption der Laserstrahlung durch das Fluid abgetragen wird. Als Fluid wird ein Bad einer Lösung oder Dispersion von organischen Stoffen und anorganischen Pigmenten beansprucht.

Die DE 102005055174 B3 beschreibt ein Verfahren zum Materialabtrag mittels Laserstrahlung von für die Laserwellenlänge transparenten Materialien durch Anwendung von Pulslaserstrahlung auf die bezüglich der einfallenden Laserstrahlung gegenüberliegende Seite des transparenten Materials, das in Kontakt mit einer Flüssigkeit steht, die einen hohen Absorptionskoeffizienten von grösser 1000 cm⁻¹ im Spektralbereich 0,2 bis 11 µm besitzt, wobei die Flüssigkeit metallische Eigenschaften aufweist.

Die DE 10 2011 051 198 A1 offenbart ein gattungsgemäßes Verfahren sowie eine gattungsgemäße Vorrichtung. Um das Problem des Abtransports von Abtragprodukten zu lösen, wird bei dem dortigen Verfahren ein Abtragmaterial-Abführkanal gebildet, indem die Fokusposition des Laserstrahls von der Position an der Unterseite des Werkstücks unter Materialabtrag durch das fokussierte Laserlicht in das Innere des Werkstücks hinein verfahren wird. Das abgetragene Werkstückmaterial kann zum Beispiel mittels der Schwerkraft aus dem Inneren des Werkstücks hinausbefördert werden.

Die JP 2000-015467 A beschreibt ein Verfahren zum Durchtrennen eines Werkstücks mithilfe von Laserstrahlen. Dabei wird an der Strahlaustrittsseite des Werkstücks Wasser in Kontakt mit dem Werkstück gebracht, um das Werkstück zu kühlen.

### AUFGABE UND LÖSUNG

Es ist eine Aufgabe der vorliegenden Erfindung, ein gattungsgemäßes Verfahren zur Herstellung eines strukturierten Elements bereitzustellen, welches es erlaubt, strukturierte Elemente mit sehr feinen und sauber definierten dreidimensionale Oberflächenstrukturen zu schaffen. Es ist eine weitere Aufgabe, eine zur Durchführung des Verfahrens geeignete Vorrichtung sowie entsprechend hergestellte strukturierte Elemente bereitzustellen.

Zur Lösung dieser Aufgaben stellt die Erfindung ein Verfahren mit den Merkmalen von Anspruch 1 bereit. Weiterhin werden eine Vorrichtung mit den Merkmalen von Anspruch 7 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Die Erfindung beruht unter anderem auf der Erkenntnis, dass durch die Ablation große Mengen von Partikeln und/oder gasförmigen Abtragsprodukten entstehen können, die sich wieder auf der Oberfläche absetzen und diese verschmutzen können. Insbesondere bei Strukturen mit großem Aspektverhältnis und/oder bei Strukturen mit geringen lateralen Strukturdimensionen lassen sich die Ablagerungen durch einen Gasstrom nicht wirksam verhindern, da das Innere solcher Strukturen vom Gas nur schlecht erreicht wird, das abgetragene Material somit nicht "herausgespült" werden kann und sich direkt im Inneren von Bohrungen und ähnlichen tiefen Strukturen niederschlagen und diese dadurch wieder zusetzen kann. Gerade bei Strukturen mit geringen Strukturgrößen kann sich ein Niederschlag des ablatierten Materials deutlich stärker bemerkbar machen als bei gröberen Strukturen. Das verdampfte Material kann auf den Wänden der erzeugten Strukturen wieder kondensieren. Dadurch kann es vorkommen, dass die Oberflächenqualität der erzeugten Strukturen deutlich verringert wird, so dass keine optische Qualität mehr erreicht wird. Außerdem können scharfe Kanten abgerundet werden und feine Strukturen können sich zusetzen. Weiterhin ist rekondensiertes Werkstückmaterial anders als das ursprüngliche Werkstückmaterial selbst in der Regel nicht mehr transparent für die verwendete Laserwellenlänge. Daher kann der Laserstrahl hier besonders stark absorbiert werden, was zu einer unerwünschten Erwärmung führen kann.

Gemäß der Lehre der beanspruchten Erfindung wird die Rückseite des Werkstücks zumindest in dem gerade bearbeiteten Bearbeitungsbereich um den Fokusbereich herum während der Laserbearbeitung mit einer für die Laserstrahlung transparenten, strömungsfähigen Flüssigkeit in Kontakt gebracht. Dadurch ist es möglich, das abgetragene Material aus den ggf. engen Zwischenräumen der Strukturen zu entfernen, bevor es sich wieder absetzen kann. Der Begriff "transparent" bedeutet in diesem Zusammenhang, dass die Flüssigkeit für die Laserstrahlung möglichst wenig absorbierend wirken soll, so dass die Flüssigkeit selbst mit der Laserstrahlung nicht oder kaum wechselwirkt. Die Flüssigkeit leistet somit keinen oder keinen wesentlichen Beitrag zum Ablationsprozess, kann aber verhindern, dass sich Abtragsprodukte wieder an den erzeugten Strukturen absetzen. Die Mikrostruktur der freigelegten Oberflächen wird somit praktisch ausschließlich durch die laserinduzierte Multi-Photonen-Absorption bestimmt, schwer kontrollierbare chemische Prozesse können vermieden werden. Die Gestalt der erzeugten Strukturen lässt sich somit über die Eigenschaften der Laserstrahlung exakt vorgeben. Das Flüssigkeitsvolumen sollte ausreichend groß sein, damit Abtragsprodukte an ihrem Entstehungsort in die Flüssigkeit aufgenommen, von Flüssigkeit umschlossen und durch die Flüssigkeit von ihrem Entstehungsort abtransportiert werden können.

Eine zur Durchführung des Verfahrens geeignete Vorrichtung weist eine Flüssigkeitsbereitstellungseinrichtung auf, die dafür ausgebildet ist, die Rückseite des Werkstücks zumindest in einem den Fokusbereich umfassenden Bearbeitungsbereich während der Bearbeitung in Kontakt mit einer strömungsfähigen Flüssigkeit zu bringen.

Eine besonders gute Reinhaltungswirkung wird bei der beanspruchten Erfindung dadurch erreicht, dass zumindest ein Teil der Flüssigkeit in eine in Richtung des Bearbeitungsbereichs gerichtete Strömung versetzt wird. Dadurch kann ein besonders wirksamer Abtransport von Ablationsprodukten erreicht und eine ungünstige Anreicherung von Ablationsprodukten in der Nähe des Fokusbereichs verhindert werden.Bei umfangreichen Versuchen zeigte sich, dass eine besonders gute Reinhaltungswirkung häufig dann erzielt werden kann, wenn die Flüssigkeit in einem spitzen Winkel von 60° oder weniger zu der Rückseite in den Bearbeitungsbereich strömt. Dieser Winkel, der auch als Anströmungswinkel bezeichnet werden kann, bezeichnet den Winkel zwischen der z.B. durch die Orientierung einer Düse vorgebbaren Hauptströmungsrichtung der Flüssigkeit und der Rückseite. Der Winkel kann z.B. im Winkelbereich von 20° bis 50°, insbesondere im Bereich von 30° bis 45° liegen. Eine parallel oder senkrecht zur Rückseite verlaufende Strömung (Anströmungswinkel z.B. bei 15° oder weniger) kann zwar in manchen Fällen (z.B. relative flache Strukturen) ausreichen, jedoch hat sich gezeigt, dass durch eine Anströmung unter einem spitzen Winkel auch tief in das Werkstück reichende feine Zwischenräume zwischen Strukturelementen wirksam rein gehalten werden können. Wird der Anströmungswinkel zu flach, kann die Flüssigkeit ggf. nicht ausreichend in Zwischenräume eindringen. Wird der Anströmungswinkel dagegen zu steil, ist ggf. der Abtransport nicht mehr im gewünschten Ausmaß möglich.

Zur Verbesserung der Bearbeitungsqualität weist die Flüssigkeitsbereitstellungseinrichtung dementsprechend eine Pumpe und mindestens eine Düse zur Erzeugung einer in Richtung des Fokusbereichs gerichteten Strömung der Flüssigkeit auf, wobei die Düse so ausgerichtet ist, dass die Flüssigkeit in einem spitzen Winkel von 60° oder weniger zu der Rückseite in den Bearbeitungsbereich strömt.

Bei einer Ausführungsform wird Wasser als diejenige Flüssigkeit verwendet, die in Kontakt mit der Rückseite gebracht wird. Es kann sich prinzipiell um Wasser aus dem öffentlichen Leitungsnetz handeln, das kostengünstig in praktisch beliebigen Mengen verfügbar ist. Bei Bedarf kann das Wasser vor der Verwendung als Bearbeitungs-Hilfsflüssigkeit mechanisch (durch Filtern) und/oder chemisch gereinigt werden. Besondere Zusätze können vorgesehen sein, sind aber in der Regel nicht erforderlich. Bei Verwendung von Wasser können Änderung relevanter Eigenschaften der Flüssigkeit, wie z.B. eine durch die Laserstrahlung induzierte chemische Reaktion in der Flüssigkeit und in Folge dessen eine chemische Zersetzung der Flüssigkeit, vermieden werden, so dass auf kostengünstigen Weise stabile Bearbeitungsbedingungen geschaffen werde können.

Alternativ kann z.B. ein für die Laserstrahlung nicht-absorbierendes Öl mit ausreichend geringer Viskosität bzw. hoher Fließfähigkeit als diejenige Flüssigkeit verwendet werden, die in Kontakt mit der Rückseite gebracht wird.

Eine verbesserte Reinhaltungswirkung lässt sich bei manchen Ausführungsformen dadurch erzielen, dass die Flüssigkeit im Bearbeitungsbereich während der Bearbeitung permanent oder intermittierend in eine Ultraschallschwingung versetzt wird. Durch eine Strömung können Abtragsprodukte von der Werkstückoberfläche und nicht zu tiefen Strukturen zügig weggetragen werden. Es kann aber schwierig sein, in Zwischenräumen in Arrays eng stehender Säulen oder Pyramiden oder in Bohrungen mit großem Aspektverhältnis eine Flüssigkeitsströmung zu erzeugen, die alle Abtragsprodukte schnell entfernen kann. Wird eine Ultraschallschwingung in der Flüssigkeit erzeugt, die bis in diese Zwischenräume reicht, so kann das Absetzen der Abtragsprodukte auf den bearbeiteten Oberflächen verhindert werden, so dass die Flüssigkeit die Abtragsprodukte auch bei schwacher Strömung oder fehlender Strömung aufnehmen kann.

Die Ultraschallenergie kann direkt in die Flüssigkeit eingekoppelt und durch die Bearbeitungsflüssigkeit zum Bearbeitungsbereich übertragen werden. Hierzu kann ein Ultraschallerzeuger in Kontakt mit einem flüssigkeitsführenden Element (z.B. einer Leitung oder einer Düse) oder auf andere Weise im Kontakt mit der Flüssigkeit stehenden Element (z.B. einem Flüssigkeitsbehälter) stehen. Es ist alternativ oder zusätzlich auch möglich, die Ultraschallenergie über das zu bearbeitende Werkstück einzukoppeln. Beispielsweise kann eine Halteeinrichtung für das Werkstück einen Schwingquarz oder einen anderen Ultraschallerzeuger aufweisen.

Die Ultraschallerzeugung kann alternativ oder zusätzlich zur Erzeugung einer Flüssigkeitsströmung vorgesehen sein.

Für die Bereitstellung der Flüssigkeit gibt es unterschiedliche Möglichkeiten.

Bei manchen Ausführungsformen ist die Flüssigkeitsbereitstellungseinrichtung dafür konfiguriert, die Flüssigkeit in Form eines freien Flüssigkeitsstrahls (d.h. eines Freistrahls) an die Rückseite zu führen. Dann können sich die Vorderseite und die Rückseite des Werkstücks an Luft bzw. in der Umgebungsatmosphäre befinden. Damit können bei Bedarf auch sehr große Werkstücke bearbeitet werden. Vorzugsweise ist die Halteeirichtung in diesen Fällen so konfiguriert, das Werkstück mit waagerechter oder schräger Ausrichtung gehalten werden kann. Die Düse kann nachführbar sein, so dass ggf. bei unbewegtem Werkstück sukzessive unterschiedliche Oberflächenbereiche der Flüssigkeitsströmung ausgesetzt werden können.

Bei manchen Ausführungsformen weist die Flüssigkeitsbereitstellungseinrichtung einen mit der Flüssigkeit befüllbaren Flüssigkeitsbehälter auf, der in Bezug auf die Halteeinrichtung so angeordnet ist, dass das in der Halteeinrichtung gehaltene Werkstück zumindest mit der Rückseite in die Flüssigkeit eintauchen kann. Das Flüssigkeitsniveau in diesem Flüssigkeitsbad kann entsprechend der Position des Werkstücks angepasst werden.

Es ist möglich, dass das Werkstück nur teileweise eingetaucht wird, so dass die Rückseite in flächigem Kontakt mit der Flüssigkeit steht, während die Strahleintrittsseite trocken bzw. nicht benetzt ist. Die Einkopplung der Laserstrahlung kann dann unter wohldefinierten Brechungsbedingungen über die trockene Strahleintrittsseite erfolgen.

Es ist auch möglich, dass das Werkstück vollständig in die Flüssigkeit eingetaucht wird, so dass auch die Strahleintrittsseite benetzt ist. Für diesen Fall kann zwischen der Fokussieroptik und der Halteeinrichtung ein für die Laserstrahlung transparentes Einkopplungselement vorgesehen sein, durch welches die Laserstrahlung in die Flüssigkeit eingekoppelt wird. Das Einkopplungselement kann z.B. die Form einer planparallelen Platte haben. Dadurch kann vermieden werden, dass sich eventuelle Bewegungen der Flüssigkeitsoberfläche auf die Lage und die Form des Fokusbereichs auswirken.

Gemäß der Erfindung wird für die materialabtragende Bearbeitung Ultrakurzpuls-Laserstrahlung eingestrahlt, vorzugsweise mit einer Pulsdauer von maximal 50 Pikosekunden (ps). Eine Vorrichtung hierfür umfasst gemäß der Erfindung als Pulslaserquelle einen Ultrakurzpuls-Laser mit einer Pulsdauer der gepulsten Laserstrahlung betragend maximal 50 ps. Durch die Verwendung der ultrakurzen Pulse zum Materialabtrag wird der thermische Einfluss auf das Werkstück minimiert, d.h. es findet nur eine äußerst geringe oder keine Erwärmung des Werkstückmaterials um die Bearbeitungsstelle herum statt. Nach entsprechenden Bearbeitungsversuchen war eine wärmebeeinflusste Zone nicht zu sehen. Bei Verwendung ultrakurzer Pulse kann auch die bereits erwähnte Rissbildung, die bei Verwendung eines ns-Lasers auftreten kann, weitestgehend vermieden werden. Daher lassen sich mit Ultrakurzpulslasern kleinere Strukturen und/oder sauberer definierte Oberflächen der Strukturelemente erzeugen als mit Lasern mit längeren Pulsdauern.

Um am Werkstück bzw. an dessen Rückseite Strukturen mit vorgebbaren Formen, Größen, Tiefen etc. erzeugen zu können, hat die Vorrichtung eine Positionierungseinrichtung zur veränderbaren Positionierung des Fokusbereichs in Bezug auf das Werkstück. Die Positionierungseinrichtung kann z.B. eine Laserstrahlablenkungseinrichtung zur steuerbaren Ablenkung der Laserstrahlung in Bezug auf das Werkstück aufweisen, z.B. mit einem Galvamometerscanner.

Es ist möglich, nur die Rückseite zu strukturieren, während die Vorderseite des Werkstücks unverändert bzw. unstrukturiert verbleibt. Es ist auch möglich, am Werkstück Durchgangsöffnungen (eine oder mehrere) zu erzeugen, die von der Rückseite zur Vorderseite durchgehen, so dass an der Vorderseite eine Mündung entsteht. Um zu verhindern, dass während der Bearbeitung Flüssigkeit von der Rückseite durch die entstehende Durchgangsöffnung hindurch bis an die Vorderseite gelangt und dort ggf. die Bearbeitung stört, ist bei manchen Ausführungsformen ein der Fokussieroptik nachgeschaltetes Düsenelement mit einer Düsenöffnung vorgesehen, durch die die Laserstrahlung hindurch treten kann, wobei das Düsenelement dafür konfiguriert ist, bei Anschluss an eine Druckgasquelle einen auf die Strahleintrittsseite gerichteten Gasstrom zu erzeugen. Durch diesen Gasstrom kann ein Flüssigkeitsaustritt an der Vorderseite ggf. verhindert werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt eine schematische Darstellung einiger Komponenten einer Ausführungsform einer Vorrichtung zur Herstellung von strukturierten Elementen mittels Laserstrahlbearbeitung;
- Fig. 2: zeigt beispielhaft ein 3D-Modell einer durch Bearbeitung der Werkstückrückseite zu erzeugenden Struktur;
- Fig. 3: zeigt schematisch eine Schicht am unteren Ende der Struktur in Fig. 2 während der Laserstrahlbearbeitung;
- Fig. 4: zeigt eine Variante der Ausführungsform aus Fig. 1 mit einem vollständig eingetauchten Werkstück und einem gesonderten Einkopplungselement zum Einkoppeln des Laserstrahls in die Flüssigkeit;
- Fig. 5: zeigt eine Rasterelektronenmikroskop-Aufnahme einer mittels des Verfahrens hergestellten Struktur an der Rückseite eines Elements;
- Fig. 6: zeigt eine Ausführungsform einer Vorrichtung und eines Verfahrens zur Herstellung von strukturierten Elementen mittels Laserstrahlbearbeitung, worin ein freier Flüssigkeitsstrahl auf die Rückseite des Werkstücks gerichtet wird;
- Fig. 7: zeigt schematisch den Verlauf der Flüssigkeitsströmung in einer an der Rückseite entstehenden Vertiefung; und
- Fig. 8A und 8B: zeigen schematisch die Laserstrahlungsführung in zwei nacheinander durchgeführten Bearbeitungsphasen zur Erzeugung eines zylindrischen Lochs an der Rückseite eines Werkstücks.

### DETAILLIERTE BESCHREIBUNG DER AUSFÜHRUNGSBEISPIELE

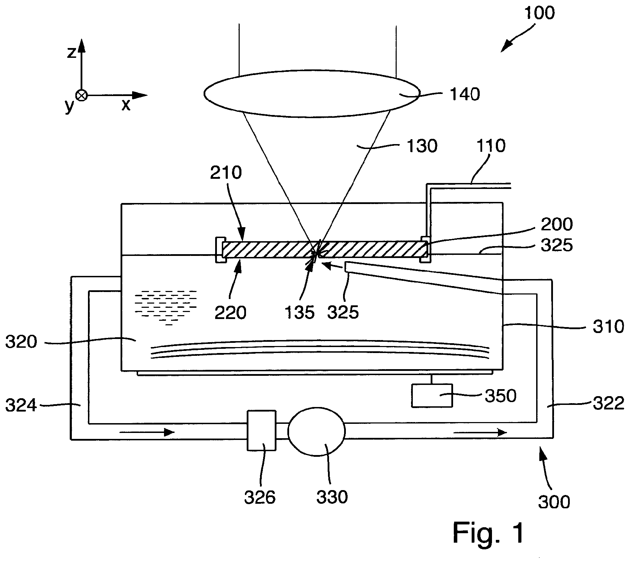

Fig. 1 zeigt eine schematische Darstellung einiger Komponenten einer Ausführungsform einer Vorrichtung 100 zur Herstellung von strukturierten Elementen durch materialabtragende Bearbeitung eines Werkstücks 200 mit gepulster Laserstrahlung. Die Vorrichtung hat eine nicht dargestellte Pulslaserquelle in Form eines Ultrakurzpulslasers zur Erzeugung von gepulster Laserstrahlung mit einer Pulsdauer im Bereich von 12 ps (Pikosekunden) und einer Wellenlänge von 1064 nm.

Das Werkstück 200 besteht im Beispielsfall Saphir aus (Al₂O₃) und hat die Form einer planparallelen Platte mit einer ebenen Vorderseite 210, einer dazu parallelen Rückseite 220 und einer dazwischen gemessenen Werkstückdicke von ca. 600 µm. Das Werkstück wird mittels einer Halteeinrichtung 110 im Wesentlichen waagerecht in einer Bearbeitungsposition gehalten. Das Werkstückmaterial ist für die Laserstrahlung weitgehend transparent. Eine Schwächung des Laserstrahls durch das Material war nicht messbar, so dass von einer Absorption im niedrigen Prozentbereich oder darunter (weniger als 1%) ausgegangen wird. Bei anderen Beispielen wurde ein Werkstück aus einem Glaswerkstoff strukturiert, z.B. aus einem Kalk-Natron-Glas.

Weiterhin hat die Vorrichtung 100 ein Strahlführungssystem zur Führung der Laserstrahlung und zur Erzeugung eines Laserstrahls 130, der im Wesentlichen vertikal nach unten auf die nach oben weisende Vorderseite des Werkstücks ausrichtbar ist, die als Strahleintrittsseite dient. Der mit Hilfe eines Strahlaufweiters aufgeweitete Laserstrahl wird von der Spiegelanordnung eines Galvanometerscanners in Richtung einer Fokussierungsoptik 140 umgelenkt, die bei der Laserstrahlbearbeitung den Laserstrahl auf einen Fokusbereich 135 fokussiert, der überwiegend im Inneren des Werkstücks in der Nähe der der Vorderseite folgenden Rückseite 220 des Werkstücks liegt.

Die Fokussierungsoptik 140 ist als telezentrische f-Theta-Optik ausgeführt und derart an den Auslenkbereich des Galvanoscanners und die Eigenschaften des eintreffenden Laserstrahles angepasst, dass der fokussierte Laserstrahl innerhalb eines flächig ausgedehnten Arbeitsbereiches in der Nähe der Rückseite 220 des Werkstücks an jeder Fokussierungsposition im Wesentlichen die gleichen Strahleigenschaften besitzt. Die f-Theta Optik sorgt somit dafür, dass sich der Fokusbereich des ausgelenkten Laserstrahls nicht auf einer Kugelfläche bewegt, sondern auf einer Ebene bewegen kann.

Der Galvanometerscanner und die Fokussieroptik sind funktionelle Komponenten einer Positionierungseinrichtung, mit welcher die Positionierung des Fokusbereichs 135 in Bezug auf das Werkstück gezielt unter der Steuerung durch ein Steuerprogramm geändert werden kann. Es sind Relativbewegungen in einer senkrecht zur optischen Achse der Fokussieroptik liegenden x-y-Ebene sowie senkrecht dazu (in z-Richtung) unabhängig voneinander steuerbar. Dabei kann die Baugruppe mit Fokussieroptik und Scanner (in z-Richtung) gehoben und gesenkt werden, das Werkstück wird nur in x-y-Ebene verschoben.

Zu der Vorrichtung gehört eine Flüssigkeitsbereitstellungseinrichtung 300, die dafür ausgebildet ist, die Rückseite 220 des Werkstücks zumindest in einem den Fokusbereich 135 umfassenden Bearbeitungsbereich während der Bearbeitung in Kontakt mit einer strömungsfähigen Flüssigkeit 320 zu bringen. Die Flüssigkeitsbereitstellungseinrichtung hat einen nach oben offenen Flüssigkeitsbehälter 310, der für den Bearbeitungsbetrieb mit einer Flüssigkeit 320 so befüllt wird, dass der Flüssigkeitsspiegel 325 etwas oberhalb des Niveaus der Rückseite des Werkstücks, aber unterhalb des Niveaus der Vorderseite (Strahleintrittsseite) 210 liegt. Die Rückseite ist somit in die Flüssigkeit eingetaucht, während die Strahleintrittsseite trocken bleibt. Als Flüssigkeit wird hier Wasser verwendet, das für die Laserstrahlung nicht-absorbierend bzw. transparent ist.

Die Flüssigkeitsbereitstellungseinrichtung weist einen geschlossenen Flüssigkeitskreislauf auf. Eine Pumpe 330 hat einen druckseitigen Austritt, der über eine seitlich in das Innere des Flüssigkeitsbehälters geführte Flüssigkeitsleitung 322 mit einer Düse 325 am Ende der Flüssigkeitsleitung verbunden ist. Die Düse ist so ausgerichtet, dass durch die Pumpe geförderte Flüssigkeit in einem spitzen Winkel von ca. 10° bis 20° schräg zu der Rückseite 220 in den Bearbeitungsbereich beim Fokusbereich 135 strömt. Von der gegenüberliegenden Seite führt eine weitere Flüssigkeitsleitung 324 durch einen Partikelfilter 326 hindurch zur Saugseite der Pumpe.

Im Bodenbereich des Flüssigkeitsbehälters ist außen ein Ultraschallgenerator 350 angebracht, der über den schwingungsfähigen Behälterboden Ultraschallenergie in die Flüssigkeit einkoppeln kann.

Bei Versuchen wurde die Vorrichtung z.B. wie folgt betrieben.

Der Laserstrahl des Ultrakurzpulslasers (Pulsdauer 12 ps, Wellenlänge 1064 nm, Leistung < 2 W, Repetitionsrate 400 kHz, Beugungsmaßzahl M² < 1.3) wurde auf die Rückseite des transparenten Werkstücks fokussiert.

Durch nichtlineare Absorption im Bereich des Fokus, also im Fokusbereich 135, findet dabei ausgehend von der Rückseite 220 des Werkstücks 200 innerhalb des Werkstückmaterials eine Materialablation statt. Der Abstand zwischen Fokussieroptik und dem Werkstück wird während der Bestrahlung so vergrößert, dass der Fokusbereich des Strahls auf der rückseitigen Materialoberfläche bleibt, beispielsweise auf dem Boden eines durch die Ablation erzeugten Sacklochs. Für eine Ablation in die Tiefenrichtung (z-Richtung, senkrecht zur Rückseite) findet somit eine Fokusnachführung statt.

Durch die Verwendung der ultrakurzen Pulse wird der thermische Einfluss auf das Werkstück minimiert, d.h. es findet nur eine äußerst geringe oder keine Erwärmung des Werkstückmaterials um die Bearbeitungsstelle herum statt. Eine wärmebeeinflusste Zone war nach den Versuchen nicht zu sehen. Dadurch wird auch die bei Verwendung längerer Pulse mögliche Rissbildung vermieden. Daher lassen sich mit Ultrakurzpulslasern kleinere Strukturen erzeugen als mit Lasern mit längeren Pulsdauern.

In Abwesenheit einer Flüssigkeit könnte sich wegen der geringeren Strukturgrößen ein Niederschlag des ablatierten Materials deutlich stärker bemerkbar machen. Das verdampfte Material könnte auf den Wänden der erzeugten Strukturen wieder kondensieren. Dadurch könnte sich die Oberflächenqualität der erzeugten Strukturen deutlich verringern. Außerdem ist rekondensiertes Werkstückmaterial, anders als das Volumenmaterial des Werkstücks, in der Regel nicht mehr transparent für die verwendete Laserwellenlänge - bei Versuchen in Luft erschien dieser Niederschlag weiß. Daher würde der Laserstrahl hier besonders stark absorbiert, was zu einer unerwünschten Erwärmung führen könnte.

Mithilfe der Flüssigkeit 320 gelingt es, das abgetragene Material aus den engen Zwischenräumen der Strukturen zu entfernen, bevor es sich wieder absetzen kann. Dazu wird die Rückseite des Werkstücks während der Laserbearbeitung in Kontakt gebracht mit der transparenten Flüssigkeit (Wasser), z.B. indem das Werkstück an oder auf einem Halter in einem Becken bzw. Flüssigkeitsbehälter platziert wird und dieses Becken bis zur Unterseite (Rückseite) des Werkstücks mit der Flüssigkeit gefüllt wird. In dieser Flüssigkeit wird durch die Pumpe eine Strömung erzeugt. Durch diese Strömung können Abtragsprodukte von der Werkstückoberfläche weggetragen werden.

Es sollte immer der gerade bearbeitete Bereich des Werkstücks angeströmt werden. Bei den Versuchen konnte bei feststehender Düse ein Bereich mit einem Durchmesser von ca. 7 mm bearbeitet werden. Für die Bearbeitung größerer Bereiche wurde die Düse mittels einer Nachführeinrichtung nachgeführt.

Es kann sein, dass in den Zwischenräumen in Arrays eng stehender Säulen oder Pyramiden und/oder in Bohrungen mit großem Aspektverhältnis keine oder nur eine geringe Flüssigkeitsströmung vorliegt, die diese Abtragsprodukte entfernen könnte. Daher wird vorzugsweise durch Aktivierung des Ultraschallerzeugers 350 zusätzlich eine Ultraschallschwingung in der Flüssigkeit erzeugt, die bis in diese Zwischenräume reicht und so das Absetzen der Abtragsprodukte verhindert.

Bei den durchgeführten Versuchen zeigte sich, dass die beste Wirkung erzielt wird, wenn das Werkstück in einem spitzen Winkel von z.B. zwischen 10° und 45° bis 50° (gemessen zwischen Hauptrichtung der Strömung und Rückseite) angeströmt wird, z.B. wie in Fig. 1 gezeigt.

Der Filter 326 entfernt die Abtragsprodukte aus dem Wasserkreislauf, so dass diese nicht wieder mit der Strömung auf das Werkstück gelangen können. Dabei wurde darauf geachtet, dass sich die Strömung durch einen vollen Filter nicht zu stark verringerte. Der Filter wurde rechtzeitig oder in regelmäßigen Abständen gewechselt. Eventuell kann die Durchflussmenge des Wasserkreislaufs mit einem geeigneten Messgerät überwacht werden, um Wechselintervalle für den Filter zu optimieren. Im Beispiel wurde ein Durchfluss von ca. 30 ml/min verwendet, der durch eine Leitung mit 4 mm Durchmesser gegen das Werkstück strömte.

Eine alleinige Verwendung eines Ultraschallerzeugers 350 ohne Anströmen der Probe ist ebenfalls möglich. Diese Verfahrensführung erlaubt eine kurzzeitige Bearbeitung nach diesem Verfahren. Jedoch können bei der Bearbeitung durch die Erwärmung der Bestrahlungsstelle Gasblasen in der Flüssigkeit entstehen. Ohne die Flüssigkeitsströmungen können sich diese nach einiger Zeit unter dem Werkstück sammeln, so dass hier eine Luftblase entstehen kann. Dadurch könnte der Abtransport der Abtragsprodukte erschwert werden. Bei den meisten Verfahrensvarianten werden daher beide Mechanismen - Ultraschall und Flüssigkeitsströmung - in Kombination verwendet.

Neben der Entfernung der Abtragsprodukte hat die Flüssigkeit auch eine kühlende Wirkung, wodurch der Wärmeeinfluss auf das Werkstück weiter verringert wird.

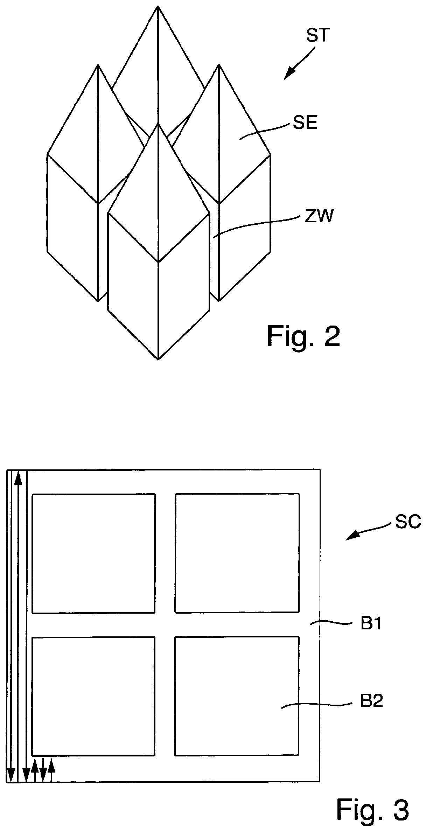

Für die Steuerung der Verfahrensführung gibt es unterschiedliche Möglichkeiten. Falls die zu erzeugenden 3D-Strukturen als 3D-Modelle vorliegen, können diese von der Software, die die Bearbeitung steuert, in einzelne Ebenen bzw. ebene Schichten parallel zur Werkstückoberfläche zerlegt werden (ähnlich wie beim 3D-Druck oder beim Lasersintern). Fig. 2 zeigt beispielhaft ein 3D-Modell einer Struktur ST, deren Strukturelemente SE nach Art von Obelisken quadratischen Querschnitts mit pyramidenförmigen Spitzen gestaltet sind, die ein 2D-Raster mit engen Zwischenräumen ZW bilden.

Die abzutragenden Schichten können z.B. eine Dicke von etwa 3 bis 8 µm haben. Die Dicke dieser Schichten ist materialabhängig und kann in Vorversuchen bestimmt werden. Fig. 3 zeigt beispielhaft eine Schicht SC am unteren Ende der Struktur in Fig. 2. Jede dieser EinzelSchichten enthält erste Bereiche B1, in denen das Werkstückmaterial durch Laserablation entfernt werden soll, und zweite Bereiche B2, in denen das Werkstückmaterial erhalten bleiben soll. Wie in Fig. 3 beispielhaft gezeigt, werden die ersten Bereiche B1 während der Bearbeitung der Ebene mit dem Strahl abgerastert (Pfeile), d.h. es findet eine Relativbewegung zwischen dem Fokusbereich des Laserstrahls und dem Werkstück in der x-y-Ebene statt, so dass der gesamte abzutragende Bereich vom Laserstrahl überstrichen wird. In beispielhaften Versuchen wurde mit einer Scangeschwindigkeit von 400 mm/s und einem lateralen Abstand der Scan-Linien von 5 µm bearbeitet.

Liegt die Struktur nicht als 3D-Modell vor, so lässt sich die Bahn des Laserstrahls über das Werkstück auch von Hand programmieren.

In der bisher beschriebenen Ausführungsform wird die Relativbewegung zwischen Werkstück und Laserstrahl durch den Galvanometerscanner erzeugt, während die Fokussieroptik aus einem F-Theta-Objektiv besteht. Mit einem F-Theta-Objektiv mit Brennweite 45 mm ergab sich ein Fokusdurchmesser von 8 - 9 µm. Damit wurden Strukturen mit lateralen Abmessungen der verbleibenden Strukturelemente und/oder der zwischen den Strukturelementen freigelegten Zwischenräume im Bereich von 50 µm erzeugt. Die Strukturtiefe kann ein Vielfaches dieser Werte betragen.

Nach dem Abschluss der Bestrahlung einer Schicht bzw. Ebene wird der Fokusbereich (Brennpunkt) des Laserstrahls nachgeführt, so dass die nächste Schicht bzw. Ebene bearbeitet werden kann. Dazu kann das Werkstück oder der Scanner mit der Fokussieroptik in Richtung des Strahls (z-Achse) bewegt werden. Es ist ebenfalls möglich, durch eine bewegliche Linse die Brennweite der Fokussieroptik leicht zu variieren.

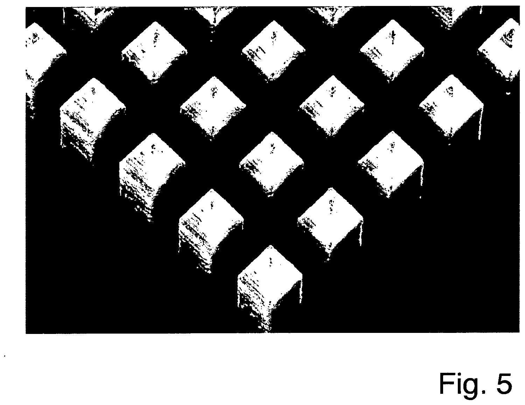

In Fig. 5 ist eine REM-Aufnahme der strukturierten Rückseite eines mit Hilfe des Verfahrens hergestellten Elements gezeigt. Die verbleibenden Strukturelemente haben die Form von Säulen mit quadratischen Querschnitt und pyramidenförmiger Spitze, die in einem Raster in orthogonalen Reihen und Spalten angeordnet sind. Dazwischen liegen schluchtartige Zwischenräume, deren laterale lichte Weite (ca. 50 µm) etwa der Breite der Strukturelemente entspricht oder etwas geringer ist, während die Tiefe mindestens viermal so groß ist.

Im Rahmen der beanspruchten Erfindung gibt es zahlreiche mögliche Varianten.

Anstelle eines Galvanometer-Scanners, der den Laserstrahl über das (unbewegte) Werkstück bewegt, kann auch ein feststehender Laserstrahl verwendet und statt des Laserstrahls das Werkstück bewegt werden. In diesem Fall kann eine Fokussieroptik mit einer oder mehreren Linsen verwendet werden, die den Laserstrahl auf einen festen Punkt fokussiert. Während das Werkstück in der Flüssigkeit oder an der Grenzfläche zwischen Flüssigkeit und Luft in der Ebene senkrecht zum einfallenden Laserstrahl bewegt wird, bleibt die Austrittsöffnung der Flüssigkeitszuführung an einer festen Position.

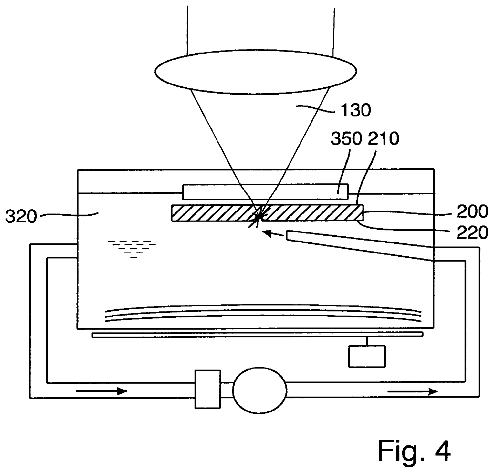

Ein komplettes Eintauchen des Werkstücks 200 in die Flüssigkeit 320 ist möglich. Fig. 4 zeigt ein entsprechendes Ausführungsbeispiel. Da eine Flüssigkeit verwendet wird, die für die eingesetzte Wellenlänge transparent ist, kann das Werkstück während der Bearbeitung komplett eingetaucht sein. Um den Laserstrahl 130 in die Flüssigkeit einkoppeln zu können, sollte jedoch ein zusätzliches optisches Glas oder transparentes anderes Einkopplungselement 350 an der Grenzfläche zwischen Flüssigkeit 320 und Luft platziert werden. Die sonstigen Komponenten können dem Beispiel aus Fig. 1 entsprechen, auf die dortige Beschreibung wird Bezug genommen.

Eine Wendelbohroptik kann ebenfalls eingesetzt werden. Der Fokus sollte dabei wie bei den anderen Varianten auf der rückseitigen Werkstückoberfläche liegen. Damit können vor allem runde Bohrungen mit höchster Präzision erzeugt werden.

Eine Verwendung einer Fokussieroptik wie beschrieben, jedoch statt mit einem feststehenden Laserstrahl mit einem wenig ausgelenkten Laserstrahl. Zur Auslenkung des Laserstrahls könnten Spiegelhalter mit eingebauten Piezo-Aktoren verwendet werden. Diese Halter werden vor der Fokussieroptik platziert und erlauben die Einstellung des Winkels, mit dem der Laserstrahl auf die Fokussieroptik trifft (bei Verwendung eines einzigen solchen Halters) oder die unabhängige Einstellung von Winkel und Auftreffpunkt auf der Fokussieroptik (bei zwei Haltern). Dadurch kann der Laserstrahl in einem kleinen Bereich auf dem Werkstück bewegt werden, ohne einen Galvanometer-Scanner zu verwenden.

In den detailliert beschriebenen Beispielen wird das Werkstück derart waagerecht gehalten, dass die Rückseite unten liegt und in ein Flüssigkeitsbad eintaucht. Der Laserstrahl wird von oben eingestrahlt. Dies ist nicht zwingend. Es ist auch möglich, das Werkstück schräg oder hochkant (Rückseite vertikal ausgerichtet) im Flüssigkeitsbad zu positionieren.

Die Flüssigkeit kann in Form eines freien Flüssigkeitsstrahls an die Rückseite geführt werden. Auch hierbei kann das Werkstück waagerecht oder schräg ausgerichtet sein.

Bisher bearbeitete Werkstücke waren mindestens 100 µm dick. Wird das Werkstück zu dünn, wird es schwieriger, die Fokussierung auf die Rückseite des Materials zu begrenzen, ohne gleichzeitig einen Abtrag an der Vorderseite zu erzeugen. Diese Beschränkung lässt sich durch Verwendung eines anderen Objektivs mit kürzerer Brennweite und damit kürzerer Rayleigh-Länge vermeiden. Zudem wird bei dünnen Substraten die Positionierung schwieriger - das Werkstück soll so positioniert werden, dass die Oberseite nicht unter den Wasserspiegel gerät. Die maximale Werkstückdicke bisher war 3 mm, mit dem verwendeten Aufbau können allerdings auch noch dickere Werkstücke bearbeitet werden, beispielsweise bis zu 20 mm oder mehr.

Der bisher verwendete Frequenzbereich der Ultraschallschwingungen lag bei ca. 50 - 60 kHz. Während der Bearbeitung wurden feste Frequenzen eingesetzt. Ein Frequenz-Sweep mit periodischer Änderung der Frequenz wäre ebenfalls möglich. Auch das Werkstück selbst lässt sich im Prinzip zu Schwingungen anregen. Das Werkstück sollte dabei dann nicht zu stark mechanisch beansprucht werden, und die Schwingungsamplitude sollte nicht so groß werden, dass die Fokussierung des Laserstrahls in das Werkstückmaterial nahe der Rückseite zu sehr erschwert wird.

Die Bearbeitung kann bei Raumtemperatur erfolgen. Zu Beginn des Bearbeitungsprozesses hatte das Wasser eine Temperatur von etwa 20°C, während der Bearbeitung erwärmte es sich bis auf ca. 40°C. Ein Einfluss der Temperatur auf die Bearbeitung konnte in diesem Temperaturbereich nicht festgestellt werden. Eine Temperaturregelung kann vorgesehen sein.

Für den Bearbeitungsprozess wurde Leitungswasser verwendet. Je nach Wasserhärte sollte eventuell entmineralisiertes Wasser verwendet werden, um Kalkablagerungen auf den Werkstücken zu vermeiden.

Strukturierte Elemente, die mit diesem Verfahren hergestellte Strukturen aufweisen, können z.B. als Master zur Abformung verwendet werden. Durch das Abformen eines Glas-Masters kann eine Form hergestellt werden, mit welcher wiederum Kopien aus z.B. Kunststoff der ursprünglichen Master-Struktur hergestellt werden können. Für eine gute Qualität der abgeformten Bauteile ist eine gute Oberflächenqualität der Strukturelemente förderlich, weshalb das beschriebene Verfahren besonders geeignet ist. Strukturierte Elemente können auch als Prägestempel verwendet werden, der in ein anderes Material hineingepresst wird.

Bei den dreidimensionalen Strukturen kann es sich z.B. um einfache Bohrungen mit in Axialrichtung gleichmäßigem oder variierendem Bohrungsquerschnitt, um pyramidenförmige oder pyramidenstumpfförmige Gebilde, um Obelisken oder Säulen oder Ähnliches handeln.

Transparente Materialien können so ausgewählt sein, dass sie zumindest im sichtbaren Spektralbereich (VIS, z.B. zwischen 380 nm und 780 nm) und/oder im nahen Infrarotbereich (NIR, zwischen 780 nm und ca. 3000 nm) hohe Transmission bzw. niedrige Absorption zeigen. Bei dem transparenten Material kann es sich z.B. um ein Glas, z.B. Quarzglas (SiO₂) oder Kalk-Natron-Glas, oder um ein kristallines Material, z.B. ein Fluoridmaterial oder ein Oxidmaterial, wie z.B. Saphir (Al₂O₃), handeln.

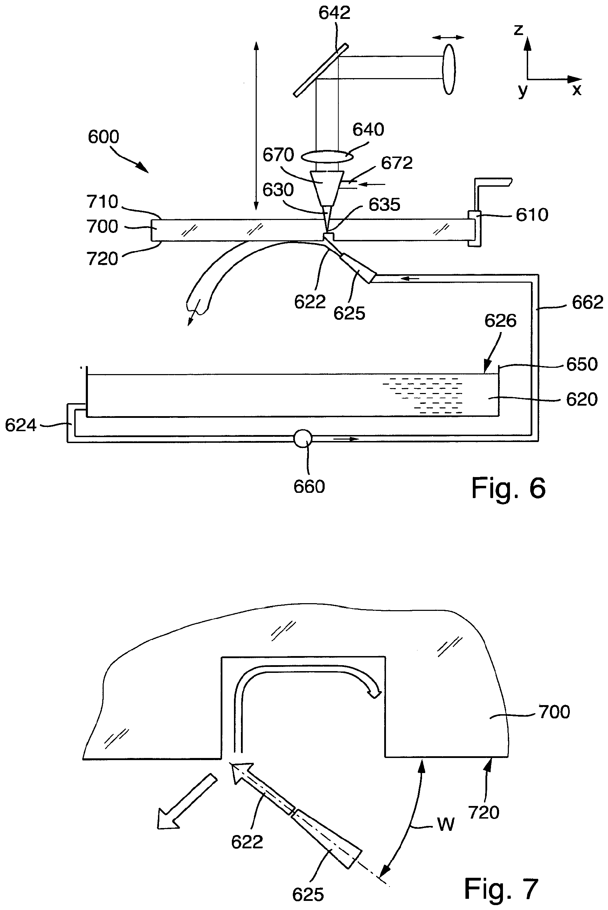

Anhand der Figuren 6 bis 8 werden Ausführungsbeispiele beschrieben, die unter anderem zur Bearbeitung besonders großer Werkstücke und/der zur Erzeugung von Durchgangslöchern besonders geeignet und angepasst sind.

Fig. 6 zeigt Komponenten einer Ausführungsform einer Vorrichtung 600 zur Herstellung von strukturierten Elementen durch materialabtragende Bearbeitung eines Werkstücks 700 mit gepulster Laserstrahlung.

Das Werkstück 700 hat die Form einer planparallelen Platte mit einer ebenen Vorderseite 710, einer dazu parallelen Rückseite 720. Das Werkstück wird mittels einer Halteeinrichtung 610 im Wesentlichen waagerecht in einer Bearbeitungsposition gehalten. Das Werkstückmaterial ist für die Laserstrahlung weitgehend transparent.

Die Vorrichtung 600 hat ein Strahlführungssystem zur Führung der Laserstrahlung und zur Erzeugung eines Laserstrahls 630, der im Wesentlichen vertikal nach unten auf die nach oben weisende Vorderseite des Werkstücks (Strahleintrittsseite) ausrichtbar ist. Der aufgeweitete Laserstrahl wird von der Spiegelanordnung eines Galvanometerscanners (mit Scannerspiegel 642) in Richtung einer Fokussierungsoptik 640 (z.B. telezentrische f-Theta-Optik) umgelenkt, die bei der Laserstrahlbearbeitung den Laserstrahl auf einen Fokusbereich 635 fokussiert, der überwiegend im Inneren des Werkstücks in der Nähe der Rückseite 720 des Werkstücks liegt.

Der Galvanometerscanner und die Fokussieroptik sind funktionelle Komponenten einer Positionierungseinrichtung, mit welcher wie bei den obigen Beispielen die Positionierung des Fokusbereichs 635 in Bezug auf das Werkstück gezielt unter der Steuerung durch ein Steuerprogramm in Vertikalrichtung und Horizontalrichtung unabhängig geändert werden kann.

Zwischen der Fokussieroptik und der Werkstückebene, also in Strahlrichtung hinter der Fokussieroptik, ist ein Düsenelement 670 angeordnet, das eine Düsenöffnung aufweist, durch die die Laserstrahlung 630 hindurch treten kann. Das Düsenelement ist dafür vorgesehen, bei Anschluss des Gasanschlusses 672 an eine Druckgasquelle einen auf die Strahleintrittsseite (Vorderseite des Werkstücks) gerichteten Gasstrom zu erzeugen. Dadurch kann der Strahleintrittsbereich mit Druckgas (z.B. Druckluft) beaufschlagt werden.

Zu der Vorrichtung gehört eine Flüssigkeitsbereitstellungseinrichtung, die dafür ausgebildet ist, die Rückseite 720 des Werkstücks zumindest in einem den Fokusbereich 635 umfassenden Bearbeitungsbereich während der Bearbeitung in Kontakt mit einer strömungsfähigen Flüssigkeit (z.B. Wasser) zu bringen. Die Flüssigkeitsbereitstellungseinrichtung hat einen nach oben offenen Flüssigkeitsbehälter 650, der für den Bearbeitungsbetrieb mit einer Flüssigkeit 620 teilweise befüllt wird. Der Flüssigkeitsbehälter dient als Vorratsbehälter und Auffangbehälter. Der Flüssigkeitsspiegel 626 liegt mit Abstand unterhalb Rückseite 720 des Werkstücks, so dass die Rückseite und die Strahleintrittsseite vor Bearbeitungsbeginn trocken bleiben.

Die Flüssigkeitsbereitstellungseinrichtung weist einen Flüssigkeitskreislauf auf. Eine Pumpe 660 hat einen druckseitigen Austritt, der über eine Flüssigkeitsleitung 662 mit einer Düse 625 am Ende der Flüssigkeitsleitung verbunden ist. Die Düse ist so ausgerichtet, dass durch die Pumpe geförderte Flüssigkeit als freier Flüssigkeitsstrahl (Freistrahl) 622 in einem spitzen Winkel W von ca. 30° bis 60° schräg zu der Rückseite 720 in den Bearbeitungsbereich beim Fokusbereich 135 strömt und von dort in den Flüssigkeitsbehälter zurück tropft bzw. läuft. Von der gegenüberliegenden Seite führt eine weitere Flüssigkeitsleitung 624 durch einen Partikelfilter hindurch zur Saugseite der Pumpe 660.

Mit dieser Vorrichtung können z.B. die folgenden Verfahrensvarianten durchgeführt werden.

Bei dem Verfahren befinden sich sowohl die Vorderseite 710 als auch die Rückseite 720 des zu bearbeitenden Werkstücks 700 an Luft. Das Werkstück ist so gehaltert, dass der zu bearbeitende Bereich von der Rückseite her frei zugänglich ist.

Die Bestrahlung mit dem Laserstrahl 630 erfolgt, wie oben beschrieben, von der Vorderseite, wobei der Laserstrahl so auf die rückseitige Oberfläche fokussiert ist, dass im Bereich des Fokus ein Materialabtrag aufgrund der durch die hohe Energiedichte ausgelöste nichtlineare Absorption stattfindet. Oberhalb des Fokusbereichs 635 tritt der Laserstrahl praktisch ohne materialverändernde Wechselwirkung durch das transparente Werkstück 700 hindurch.

Von der Rückseite 720 her wird ein freier Flüssigkeitsstrahl 622 so auf das Werkstück gerichtet, dass die Flüssigkeit (in diesem Beispiel Wasser) einen begrenzten zu bearbeitenden Bereich um den Fokusbereich benetzt. Der Flüssigkeitsstrom auf das Werkstück kann dabei während der gesamten Zeit der Laserbestrahlung aufrechterhalten bleiben, so dass sich der Bearbeitungsbereich ständig in Kontakt mit der Flüssigkeit befindet. Dadurch werden bei der Bearbeitung entstehende Ablationsrückstände von der Bearbeitungsstelle entfernt, um eine Verschmutzung des Werkstücks zu vermeiden.

Mit diesem Verfahren wurden bei einem Versuch zylindrische Durchgangsbohrungen mit einem Durchmesser von 500 µm in 1.3 mm dickem Glas erzeugt. Der Laserstrahl (Wellenlänge 532 nm, Pulsdauer 12 ps, Repetitionsrate 400 kHz, mittlere Leistung 1.6 W) wurde mittels einer Fokussieroptik mit einer Brennweite von 60 mm auf die Rückseite des Werkstücks fokussiert. Längere Brennweiten wie z.B. 100 mm können ebenfalls verwendet werden. Vor der Fokussieroptik befindet sich im Strahlengang eine Galvanometerscanner-Anordnung, mit der der Laserstrahl in der Bearbeitungsebene parallel zur Werkstückoberfläche in x- und y-Richtung bewegt werden kann.

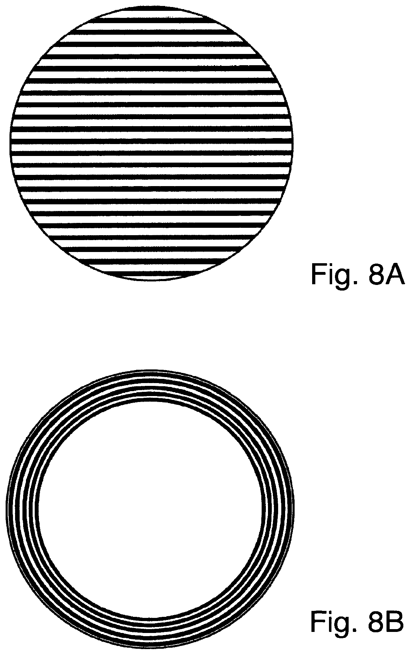

Der Strahldurchmesser in der Fokusebene betrug etwa 10 µm. Um mit diesem Laserstrahl eine Bohrung mit 500 µm Durchmesser zu erzeugen, wurde er mit Hilfe des Scanners in zwei unterschiedlichen Bewegungsmustern über das Werkstück geführt. Das erste Bewegungsmuster (vgl. Fig. 8A) bestand aus parallelen Linien mit einem Abstand von 6 µm, die den gesamten abzutragenden Bereich ausfüllten. Das zweite Bewegungsmuster (vgl. Fig. 8A) bestand aus fünf konzentrischen Kreisen mit einem Abstand von 6 µm entlang des Rands des abzutragenden Bereichs. Beispielsweise kann in einer ersten Bearbeitungsebene an der Unterseite des Werkstücks der Strahl im ersten Bewegungsmuster geführt werden und auf diese Weise eine Materialschicht mit einer Dicke von etwa 5 µm abgetragen werden. Anschließend kann der gesamte Optik-Aufbau mit Fokussieroptik und Galvanometerscanner um diesen Betrag nach oben vom Werkstück weg (z-Richtung) verschoben und der Fokus des Laserstrahls dadurch um dieselbe Strecke in Richtung der Substratoberfläche (Vorderseite 710) verschoben werden. Der Laserstrahl kann dann in der nächsten Bearbeitungsebene mit dem zweiten Bewegungsmuster (Fig. 8B) geführt werden. Daraufhin können wieder eine Verschiebung in z-Richtung und ein Abtrag mit dem ersten Bewegungsmuster erfolgen usw.

Statt einer Bewegung des gesamten Optikaufbaus kann auch mit einer zusätzlichen, entlang der Strahlachse beweglichen Linse (optionale Linse 645) die Fokusposition entlang der z-Achse geändert werden. Statt eines Wechsels der zwei Bewegungsmuster kann der gesamte Abtrag auch nur unter Verwendung des ersten Bewegungsmuster (Linienmuster gemäß Fig. 8A) erfolgen, der Wechsel zwischen den beiden Mustern ermöglicht jedoch eine schnellere Bearbeitung, ohne dabei die Qualität der Oberfläche der Bohrung zu verringern. Eine alleinige Verwendung des zweiten Bewegungsmusters zur Erzeugung einer Durchgangsbohrung ist ebenfalls denkbar.

Destilliertes Wasser wurde mit Hilfe einer Düse 625 mit einem Durchmesser von 1 mm auf die Rückseite des Werkstücks geleitet. Die Düse war dabei mit einem Winkel W von etwa 60° zur Oberfläche angeordnet. Die Durchflussmenge lag bei 250 ml/min oder weniger. Der Auftreffpunkt des Wasserstrahls auf die Werkstückoberfläche wurde dabei so gewählt, dass ein merklicher Anteil des Wassers in die Bohrung hineingelangte. Dies wurde erreicht, indem der Wasserstrahl auf die von der Düse aus gesehen hintere Kante der Bohrung gerichtet wurde. Das Wasser strömt dann entlang der gegenüberliegenden Seite der Bohrung wieder aus dieser hinaus (vgl. Fig.7). Ein Teil des Wassers strömt statt in die Bohrung hinein auch eine kurze Strecke entlang der rückseitigen Werkstückoberfläche. Die beschriebenen Wasserströmungen tragen die Ablationsrückstände mit sich und entfernen diese von der Substratoberfläche. Das Wasser mit den Ablationsrückständen wurde in einer Wanne (Flüssigkeitsbehälter 650) unter dem Werkstück aufgefangen und mit Hilfe einer Pumpe und nach einer Filterung der Verunreinigungen wieder zur Düse zurückgeführt.

Es sollte verhindert werden, dass Wasser durch die Bohrung hindurchtritt und die Oberseite (Vorderseite 710) des Werkstücks benetzt. Durch die vom Wasser mitgetragenen Rückstände könnte diese Oberfläche verunreinigt werden; außerdem könnte durch den durch das Wasser veränderten Brechungsindex die Fokussierung des Laserstrahls gestört werden. Daher befindet sich beim Ausführungsbeispiel von Fig. 6 zwischen der Fokussieroptik und der Werkstückoberfläche ein Düsenelement 670 mit Öffnungsdurchmesser 2 mm, durch die der Laserstrahl 630 hindurchtritt. Dieses Düsenelement ist mit einem Gasanschluss versehen, durch den Druckluft oder ein Inertgas wie Stickstoff eingeleitet werden kann. Durch die Düse wird ein Gasstrom in einen Bereich auf die Oberseite (Vorderseite) des Werkstücks geleitet, der der Bearbeitungsposition auf der Unterseite (Rückseite) gegenüberliegt. Sobald durch die Laserbearbeitung die Durchgangsbohrung geöffnet wird, tritt der Gasstrom durch die Bohrung hindurch und drückt das einströmende Wasser nach unten aus dieser heraus, so dass das Wasser nicht auf die Oberseite gelangen kann. Die Öffnung der Gasdüse kann auch andere Durchmesser haben. Für kleinere zu erzeugende Strukturen kann der Durchmesser ebenfalls geringer sein, beispielsweise 1 mm, für eine Anordnung mehrerer kleiner Strukturen kann die Düse so ausgebildet sein, dass die gesamte Anordnung mit einem Gasstrom beaufschlagt wird.

Nach der Fertigstellung einer Durchgangsbohrung kann eine Relativbewegung zwischen dem Werkstück und der Bearbeitungseinheit durchgeführt werden, um zur nächsten Bearbeitungsposition zu gelangen. Dies kann durch eine Verschiebung des Werkstücks erfolgen, aber auch durch eine gleichzeitige Bewegung des Optikaufbaus einschließlich der Gasdüse und der Düse (Flüssigkeitsdüse 625) für den Flüssigkeitsstrahl.

In einem anderen Anwendungsbeispiel des Verfahrens wurden Durchgangsbohrungen mit einem Durchmesser von ca. 20 µm in einem Glassubstrat mit einer Dicke von 300 µm erzeugt. Hierbei wurde der Laserstrahl bei der Bearbeitung entlang einer kreisförmigen Kontur geführt. Der Abstand zwischen den Bearbeitungsebenen wurde auf 2 µm verringert. Bei dieser Bohrungsgeometrie konnte auf den Gasstrom verzichtet werden, da die Gefahr eines Flüssigkeitsaustritts hier gering war.

Während im ersten Beispiel der Scanbereich des Laserstrahls durch die Gasdüse (Düsenelement 670) beschränkt wurde, kann bei Verzicht auf diese der gesamte Scanbereich des Galvanometerscanners von beispielsweise 45 x 45 mm ausgenutzt werden, wodurch in rascher Folge ohne Relativbewegung zwischen Optikeinheit und Werkstück eine große Zahl nahe beieinanderliegender Bohrungen erzeugt werden kann. Der Wasserstrahl kann bei Erzeugung einer einzelnen Bohrung oder bei mehreren in einem relativ kleinen Arbeitsbereich gelegenen hier wieder durch eine Runddüse mit 1 mm Durchmesser auf die Bohrung gerichtet werden, wobei allerdings der Volumenstrom des Wassers gegenüber den größeren Bohrungen deutlich verringert werden sollte. Vorteilhaft ist es, einen größeren Bereich des Werkstücks als nur eine einzelne Bohrung mit dem Wasserstrahl zu beaufschlagen. Dies kann beispielsweise durch eine Düse erfolgen, die einen Flüssigkeitsstrahl mit eher elliptischem oder linienförmigem Querschnitt erzeugt.

## Patentansprüche

1. Verfahren zur Herstellung eines strukturierten Elements durch materialabtragende Bearbeitung eines Werkstücks (200) mit gepulster Laserstrahlung,
wobei das Werkstück (200) aus einem für die Laserstrahlung transparenten Werkstückmaterial besteht, die Laserstrahlung von einer Strahlungseintrittsseite (210) in das Werkstück eingestrahlt und im Bereich einer der Strahlungseintrittsseite gegenüber liegenden Rückseite (220) des Werkstücks innerhalb des Werkstücks derart in einem Fokusbereich (135) fokussiert wird, dass im Fokusbereich durch Multi-Photonen-Absorption Werkstückmaterial abgetragen wird,
wobei für die materialabtragende Bearbeitung Ultrakurzpuls-Laserstrahlung eingestrahlt wird,
**dadurch gekennzeichnet, dass** die Rückseite (220) des Werkstücks (200) zumindest in einem den Fokusbereich (135) umfassenden Bearbeitungsbereich während der Bearbeitung in Kontakt mit einer für die Laserstrahlung transparenten, strömungsfähigen Flüssigkeit (320) gebracht wird,
wobei zumindest ein Teil der Flüssigkeit (320) derart in eine in Richtung des Bearbeitungsbereichs gerichtete Strömung versetzt wird, dass die Flüssigkeit in einem spitzen Winkel von 60° oder weniger zu der Rückseite (220) in den Bearbeitungsbereich strömt, so dass strukturierte Elemente mit sehr feinen und sauber definierten dreidimensionalen Oberflächenstrukturen geschaffen werden.

2. Verfahren nach Anspruch 1, **dadurch gekennzeichnet, dass** der Winkel im Winkelbereich von 20° bis 50° liegt.

3. Verfahren nach einem der vorhergehenden Ansprüche, **dadurch gekennzeichnet, dass** die Flüssigkeit (320) im Bearbeitungsbereich während der Bearbeitung in eine Ultraschallschwingung versetzt wird, wobei vorzugsweise Ultraschall in die Flüssigkeit eingekoppelt und durch die Bearbeitungsflüssigkeit zum Bearbeitungsbereich übertragen wird.

4. Verfahren nach einem der vorhergehenden Ansprüche, **dadurch gekennzeichnet, dass** die Flüssigkeit in Form eines freien Flüssigkeitsstrahls (622) an die Rückseite geführt wird, wobei vorzugsweise das Werkstück waagerecht oder schräg ausgerichtet wird.

5. Verfahren nach einem der Ansprüche 1 bis 3, **dadurch gekennzeichnet, dass** die Flüssigkeit in einem Flüssigkeitsbehälter (310) bereitgestellt wird und das Werkstück zumindest mit seiner Rückseite (220) in die Bearbeitungsflüssigkeit eingetaucht wird.

6. Verfahren nach einem der vorhergehenden Ansprüche, **dadurch gekennzeichnet, dass** Ultrakurzpuls-Laserstrahlung mit einer Pulsdauer von maximal 50 Pikosekunden eingestrahlt wird.

7. Vorrichtung (100) zur Herstellung eines strukturierten Elements durch materialabtragende Bearbeitung eines Werkstücks (200) mit gepulster Laserstrahlung, insbesondere zur Durchführung des Verfahrens nach einem der vorhergehenden Ansprüche, mit:
einer Pulslaserquelle zur Erzeugung von gepulster Laserstrahlung mit einer Wellenlänge, für die das Werkstückmaterial im Wesentlichen transparent ist, wobei die Pulslaserquelle eine Ultrakurzpuls-Laserquelle ist und eine Pulsdauer der gepulsten Laserstrahlung maximal 50 ps beträgt;
einer Halteeinrichtung (110) zum Halten des Werkstücks in einer Bearbeitungsposition derart, dass die Laserstrahlung von einer Strahleintrittsseite (210) auf das Werkstück einstrahlbar ist;
einer Fokussieroptik (140) zur Fokussierung der gepulsten Laserstrahlung durch die Strahleintrittsseite hindurch in einen Fokusbereich (135) an einer der Strahleintrittsseite gegenüberliegenden Rückseite (220) des Werkstücks zur rückseitigen Ablation von Material des Werkstücks durch Multi-Photonen-Absorption; und
einer Positionierungseinrichtung zur veränderbaren Positionierung des Fokusbereichs (135) in Bezug auf das Werkstück (200);
**gekennzeichnet durch**
eine Flüssigkeitsbereitstellungseinrichtung (300), die dafür ausgebildet ist, die Rückseite (220) des Werkstücks zumindest in einem den Fokusbereich (135) umfassenden Bearbeitungsbereich während der Bearbeitung in Kontakt mit einer strömungsfähigen Flüssigkeit (320) zu bringen, wobei die Flüssigkeitsbereitstellungseinrichtung (300) eine Pumpe (330) und mindestens eine Düse (325) zur Erzeugung einer in Richtung des Fokusbereichs (135) gerichteten Strömung der Flüssigkeit (320) aufweist, wobei die Düse so ausgerichtet ist, dass die Flüssigkeit in einem spitzen Winkel von 60° oder weniger zu der Rückseite in den Bearbeitungsbereich strömt.

8. Vorrichtung nach Anspruch 7, **dadurch gekennzeichnet, dass** der Winkel im Winkelbereich von 20° bis 50° liegt.

9. Vorrichtung nach Anspruch 7 oder 8, **dadurch gekennzeichnet, dass** die Flüssigkeitsbereitstellungseinrichtung dafür konfiguriert ist, die Flüssigkeit in Form eines freien Flüssigkeitsstrahls an die Rückseite zu führen, wobei vorzugsweise die Halteeirichtung dafür konfiguriert ist, das Werkstück mit waagerechter oder schräger Ausrichtung zu halten und/oder dadurch, dass die Düse nachführbar ist.

10. Vorrichtung nach Anspruch 7, 8 oder 9, **dadurch gekennzeichnet, dass** die Flüssigkeitsbereitstellungseinrichtung einen mit der Flüssigkeit befüllbaren Flüssigkeitsbehälter (310) aufweist, der in Bezug auf die Halteeinrichtung (110) so angeordnet ist, dass das in der Halteeinrichtung gehaltene Werkstück (200) zumindest mit der Rückseite (220) in die Flüssigkeit (320) eintauchen kann.

11. Vorrichtung nach einem der Ansprüche 7 bis 10, **gekennzeichnet durch** ein zwischen der Fokussieroptik (140) und der Halteeinrichtung (110) angeordnetes Einkopplungselement (350), das für die Wellenlänge der Laserstrahlung transparent ist und zur Einkopplung der Laserstrahlung in die im Flüssigkeitsbehälter aufgenommene Flüssigkeit (320) ausgebildet ist.

12. Vorrichtung nach einem der Ansprüche 7 bis 11, **gekennzeichnet durch** eine Ultraschallquelle (350) zur Erzeugung einer Ultraschallschwingung in der Flüssigkeit (320) mindestens an der Rückseite (220) im Bearbeitungsbereich.

13. Vorrichtung nach einem der Ansprüche 7 bis 12, **dadurch gekennzeichnet, dass** die Positionierungseinrichtung eine Laserstrahlablenkungseinrichtung zur steuerbaren Ablenkung der Laserstrahlung in Bezug auf das Werkstück aufweist.

14. Vorrichtung nach einem der Ansprüche 7 bis 13, **gekennzeichnet durch** ein der Fokussieroptik nachgeschaltetes Düsenelement (670) mit einer Düsenöffnung, durch die die Laserstrahlung (630) hindurch treten kann, wobei das Düsenelement dafür konfiguriert ist, bei Anschluss an eine Druckgasquelle einen auf die Strahleintrittsseite gerichteten Gasstrom zu erzeugen.

## Claims

1. Method for producing a structured element by means of material-removing machining of a workpiece (200) with pulsed laser radiation,
the workpiece (200) consisting of a workpiece material that is transparent to the laser radiation, the laser radiation being radiated into the workpiece from a radiation entry side (210) and, in the area of a rear side (220) of the workpiece located opposite the radiation entry side, being focused within the workpiece in a focus area (135) in such a way that workpiece material is removed in the focus area by multi-photon absorption, ultra-short-pulse laser radiation being radiated in for the material-removing machining,
**characterized in that**
the rear side (220) of the workpiece (200), at least in a machining area comprising the focus area (135), during machining is brought into contact with a free-flowing liquid (320) that is transparent to the laser radiation,
wherein at least a part of the liquid (320) is set flowing in a direction towards the machining area in such a way that the liquid flows into the machining area at an acute angle of 60° or less to the rear side (220), such that structured elements having very fine and cleanly defined three-dimensional surface structures are created.

2. Method according to claim 1, **characterized in that** the angle lies in the angular range from 20° to 50°.

3. Method according to any of the preceding claims, **characterized in that** the liquid (320) in the machining area is set vibrating ultrasonically during the machining, wherein ultrasound is preferably injected into the liquid and is transferred to the machining area by the machining liquid.

4. Method according to any of the preceding claims, **characterized in that** the liquid is led to the rear side in the form of a free liquid jet (622), wherein preferably the workpiece is oriented horizontally or obliquely.

5. Method according to any of the claims 1 to 3, **characterized in that** the liquid is provided in a liquid container (310) and the workpiece is dipped into the machining liquid, at least with its rear side (220).

6. Method according to any of the preceding claims, **characterized in that** ultra-short-pulse laser radiation is radiated in with a pulse length of at most 50 picoseconds.

7. Device (100) for producing a structured element by means of material-removing machining of a workpiece (200) with pulsed laser radiation, in particular for performing the method according to any of the preceding claims, comprising:
a pulsed laser source for producing pulsed laser radiation with a wavelength to which the workpiece material is substantially transparent, wherein the pulsed laser source is an ultra-short-pulse laser source and a pulse length of the pulsed laser radiation is at most 50 ps;
a holding apparatus (110) for holding the workpiece in a machining position in such a way that the laser radiation can be radiated onto the workpiece from a beam entry side (210);
focusing optics (140) for focusing the pulsed laser radiation through the beam entry side into a focus area (135) on a rear side (220) of the workpiece, located opposite the beam entry side, for the rear-side ablation of material from the workpiece by multi-photon absorption; and
a positioning apparatus for the variable positioning of the focus area (135) in relation to the workpiece (200);
**characterized by**
a liquid-providing apparatus (300) which is designed to bring the rear side (220) of the workpiece, at least in a machining area comprising the focus area (135), during machining into contact with a free-flowing liquid (320), wherein the liquid-providing apparatus (300) has a pump (330) and at least one nozzle (325) for producing a flow of the liquid (320) in a direction towards the focus area (135), wherein the nozzle is aligned such that the liquid flows into the machining area at an acute angle of 60° or less to the rear side.

8. Device according to claim 7, **characterized in that** the angle lies in the angular range from 20° to 50°.

9. Device according to claim 7 or 8, **characterized in that** the liquid-providing apparatus is configured to lead the liquid to the rear side in the form of a free liquid jet, wherein the holding apparatus is preferably configured to hold the workpiece with a horizontal or oblique orientation, and/or **in that** the nozzle is movable.

10. Device according to claim 7, 8 or 9, **characterized in that** the liquid-providing apparatus has a liquid container (310) which can be filled with the liquid and which is arranged in relation to the holding apparatus (110) such that the workpiece (200) held in the holding apparatus can dip into the liquid (320), at least with the rear side (220).

11. Device according to any of the claims 7 to 10, **characterized by** an injection element (350) which is arranged between the focusing optics (140) and the holding apparatus (110), is transparent to the wavelength of the laser radiation and is designed to inject the laser radiation into the liquid (320) contained in the liquid container.

12. Device according to any of the claims 7 to 11, **characterized by** an ultrasonic source (350) for producing an ultrasonic vibration in the liquid (320), at least on the rear side (220) in the machining area.

13. Device according to any of the claims 7 to 12, **characterized in that** the positioning apparatus has a laser beam deflection apparatus for the controllable deflection of the laser radiation in relation to the workpiece.

14. Device according to any of the claims 7 to 13, **characterized by** a nozzle element (670), connected downstream of the focusing optics, having a nozzle opening through which the laser radiation (630) can pass, wherein the nozzle element is configured, when connected to a compressed gas source, to generate a gas flow directed to the jet-inlet side.

## Revendications

1. Procédé de fabrication d'un élément structuré par usinage par enlèvement de matière d'une pièce ouvrée (200) avec un rayonnement laser pulsé,
la pièce ouvrée (200) se composant d'un matériau de pièce ouvrée transparent pour le rayonnement laser, le rayonnement laser étant irradié dans la pièce ouvrée depuis un côté d'entrée de rayonnement (210) et étant concentré dans une zone de concentration (135) dans la zone d'un côté arrière (220) de la pièce ouvrée qui se trouve à l'opposé du côté d'entrée de rayonnement à l'intérieur de la pièce ouvrée de telle sorte que de la matière de la pièce ouvrée est enlevée dans la zone de concentration par absorption multiphotonique,
un rayonnement laser à impulsions ultra-courtes étant irradié pour l'usinage par enlèvement de matière, **caractérisé en ce que**
le côté arrière (220) de la pièce ouvrée (200) est mis en contact pendant l'usinage avec un liquide (320) capable de s'écouler transparent au rayonnement laser, au moins dans une zone d'usinage comprenant la zone de concentration (135),
au moins une partie du liquide (320) étant amenée à s'écouler de manière orientée en direction de la zone d'usinage de telle sorte que le liquide s'écoule dans la zone d'usinage sous un angle aigu inférieur ou égal à 60° par rapport au côté arrière (220), de sorte que des éléments structurés ayant des structures de surface tridimensionnelles très fines et précisément définies sont créés.

2. Procédé selon la revendication 1, **caractérisé en ce que** l'angle est compris dans la plage angulaire de 20° à 50°.

3. Procédé selon l'une des revendications précédentes, **caractérisé en ce que** le liquide (320) dans la zone d'usinage est mise en vibration ultrasonique pendant l'usinage, des ultrasons étant de préférence injectés dans le liquide et transmis jusqu'à la zone d'usinage par le liquide d'usinage.

4. Procédé selon l'une des revendications précédentes, **caractérisé en ce que** le liquide est acheminé au niveau du côté arrière sous la forme d'un jet de liquide (622) libre, la pièce ouvrée étant de préférence orientée horizontalement ou en biais.

5. Procédé selon l'une des revendications 1 à 3, **caractérisé en ce que** le liquide est fourni dans un réservoir à liquide (310) et la pièce ouvrée est immergée dans le liquide d'usinage au moins avec son côté arrière (220).

6. Procédé selon l'une des revendications précédentes, **caractérisé en ce qu'**un rayonnement laser à impulsions ultra-courtes ayant une durée d'impulsion maximale de 50 picosecondes est irradié.

7. Arrangement (100) de fabrication d'un élément structuré par usinage par enlèvement de matière d'une pièce ouvrée (200) avec un rayonnement laser pulsé, notamment destiné à mettre en œuvre le procédé selon l'une des revendications précédentes, comprenant :
une source de laser pulsé destinée à générer un rayonnement laser pulsé ayant une longueur d'onde à laquelle le matériau de pièce ouvrée est sensiblement transparent, la source de laser pulsé étant une source de laser à impulsions ultra-courtes et une durée d'impulsion du rayonnement laser pulsé étant au maximum de 50 ps ;
un dispositif de maintien (110) destiné à maintenir la pièce ouvrée dans une position d'usinage de telle sorte que le rayonnement laser peut être irradié sur la pièce ouvrée depuis un côté d'entrée de rayonnement (210) ;
une optique de concentration (140) destinée à concentrer le rayonnement laser pulsé à travers le côté d'entrée de rayonnement dans une zone de concentration (135) au niveau d'un côté arrière (220) de la pièce ouvrée qui se trouve à l'opposé du côté d'entrée de rayonnement en vue de l'ablation côté arrière de matière de la pièce ouvrée par absorption multiphotonique ; et
un dispositif de positionnement destiné à positionner de manière modifiable la zone de concentration (135) en référence à la pièce ouvrée (200) ;
**caractérisé par**
un dispositif de fourniture de liquide (300) qui est configuré pour amener le côté arrière (220) de la pièce ouvrée en contact pendant l'usinage avec un liquide (320) capable de s'écouler, au moins dans une zone d'usinage comprenant la zone de concentration (135), le dispositif de fourniture de liquide (300) possédant une pompe (330) et au moins une buse (325) destinée à générer un écoulement du liquide (320) orienté en direction de la zone de concentration (135), la buse étant orientée de telle sorte que le liquide s'écoule dans la zone d'usinage sous un angle aigu inférieur ou égal à 60° par rapport au côté arrière.

8. Arrangement selon la revendication 7, **caractérisé en ce que** l'angle est compris dans la plage angulaire de 20° à 50°.

9. Arrangement selon la revendication 7 ou 8, **caractérisé en ce que** le dispositif de fourniture de liquide est configuré pour acheminer le liquide au niveau du côté arrière sous la forme d'un jet de liquide libre, le dispositif de maintien étant de préférence configuré pour maintenir la pièce ouvrée avec une orientation horizontale ou en biais et/ou de sorte que la buse peut être asservie.

10. Arrangement selon la revendication 7, 8 ou 9, **caractérisé en ce que** le dispositif de fourniture de liquide possède un réservoir à liquide (310) qui peut être rempli du liquide, lequel est disposé par rapport au dispositif de maintien (110) de telle sorte que la pièce ouvrée (200) maintenue dans le dispositif de maintien peut être immergée dans le liquide (320) au moins avec le côté arrière (220).

11. Arrangement selon l'une des revendications 7 à 10, **caractérisé par** un élément d'injection (350) disposé entre l'optique de concentration (140) et le dispositif de maintien (110), lequel est transparent à la longueur d'onde du rayonnement laser et est configuré pour l'injection du rayonnement laser dans le liquide (320) accueilli dans le réservoir à liquide.

12. Arrangement selon l'une des revendications 7 à 11, **caractérisé par** une source d'ultrasons (350) destinée à générer une vibration ultrasonique dans le liquide (320) au moins au niveau du côté arrière (220) dans la zone d'usinage.

13. Arrangement selon l'une des revendications 7 à 12, **caractérisé en ce que** le dispositif de positionnement possède un dispositif de déviation de rayon laser destiné à dévier de manière commandable le rayonnement laser en référence à la pièce ouvrée.

14. Arrangement selon l'une des revendications 7 à 13, **caractérisé par** un élément formant buse (670) monté à la suite de l'optique de concentration, comprenant une ouverture de buse à travers laquelle peut passer le rayonnement laser (630), l'élément formant buse étant configuré pour, lors du raccordement à une source de gaz sous pression, générer un flux de gaz dirigé sur le côté d'entrée de rayonnement.
